# EUROPEAN PATENT APPLICATION

(11) **EP 1 860 656 A1**
(43) Date of publication of application: **28.11.2007**
(21) Application number: 06715392.4
(22) Date of filing: 08.03.2006
(51) Int. Cl.: G11B 7/24, G11B 7/0045, G11B 7/007

(54) **OPTICAL DISC AND OPTICAL RECORDING METHOD**

(30) Priority: 18.03.2005 JP 2005080353
(71) Applicant: FUJIFILM CORPORATION, Minato-ku Tokyo 106-8620 (JP)
(72) Inventor: KUBO, Hiroshi, Odawara-shi, Kanagawa 250-0001 (JP)
(74) Representative: Klunker . Schmitt-Nilson . Hirsch
(86) International application number: PCT/JP2006/304472
(87) International publication number: WO 2006/100916

(57) **Abstract**

The invention provides an optical disc (100) including a first substrate (10), an image-recording layer (20), a second substrate (50), an information-recording layer (60), and a cover layer (70) disposed in this order, wherein the thickness of the first substrate (10) is 0.5 to 0.7 mm, the thickness of the second substrate (50) is 0.4 to 0.7 mm, and grooves or pits are formed on the second substrate (50) at the side at which the information-recording layer is formed. The invention also provides an optical recording method of recording on an optical disc having at least an image-recording layer and an information-recording layer, the method including irradiating the optical disc with an information-recording laser beam from one side thereof to record information and irradiating the optical disc with an image-recording laser beam from the other side thereof to record an image, wherein the wavelength of the information-recording laser beam is smaller than that of the image-recording laser beam.

## Description

### TECHNICAL FIELD

The invention relates to an optical disc and an optical recording method for recording a visible image on a label side of the disc.

### BACKGROUND ART

Recently, networks such as the Internet and high-definition TV's are rapidly becoming increasingly popular and recent initiation of HDTV (High-Definition Television) broadcasting has also resulted in an increased need for a large-capacity recording medium for recording image information more easily and cost-effectively. DVD-R (digital versatile disc recordable) currently serve adequately as large-capacity optical discs, but the demand for larger capacity and higher density is constantly increasing and there exists a need for development of an optical recording medium that can satisfy these requirements. Accordingly, large-capacity optical discs allowing high-density recording with light at a wavelength shorter than that for the DVD-R are under development.

A laser beam is normally irradiated on conventional optical discs from the substrate side. However, for further improvement in density, use of a pickup emitting a shorter-wavelength laser and having an object lens with a high numerical aperture (NA) is gradually expanding. An example thereof is a blu-ray disc combining a blue purple laser emitting light at around 405 nm and an object lens having an NA of 0.85. In such a short-wavelength and high-NA optical disc (optical recording medium), the influence of the coma aberration due to disc warping increases to a nonnegligible degree.

In order to eliminate the influence of coma aberration, a laser beam for recording or reproduction is irradiated through a cover layer having a thickness of approximately 0.1 mm, which is considerably thinner than that of a conventional substrate (for example, 1.2 mm for a CD and 0.6 mm for a DVD), in order to prevent failure in recording or reproduction caused by coma aberration.

The configuration of the optical disc, for example of a rewritable phase-transition optical recording medium, is cover layer/transparent adhesive layer/dielectric layer/recording layer/dielectric layer/reflective layer/substrate, in this order from the side on which the laser beam falls. In the case of a blu-ray disc, the total thickness of the cover layer and the transparent adhesive layer is approximately 0.1 mm, and the thickness of the substrate is about 1.1 mm. Further, a plastic film is used as the cover layer.

On the other hand, the blu-ray disc described above has a larger recording capacity and allows recording of various kinds of information. Thus, it is more convenient if a description of the recorded information is displayed on the disc. An optical recording medium that displays an image on the label side by varying the contrast between the surface and the background using a laser marker has been proposed, but is aimed at optical disc applications such as DVDs (see, for example, Japanese Patent Application Laid-Open (JP-A) No. 11-66617). Alternatively, JP-ANos. 2000-113516, 2001-283464 and 2000-173096 disclose optical information-recording media allowing image formation with a laser beam.
Patent Document 1: JP-A No. 11-66617
Patent Document 2: JP-A No. 2000-113516
Patent Document 3: JP-A No. 2001-283464
Patent Document 4: JP-A No. 2000-173096

### DISCLOSURE OF INVENTION

### Problems to be Solved by the Invention

The invention was made in view of the conventional problems above and provides an optical disc in the blu-ray disc format on which a visible image with superior visibility can be formed and an optical recording method capable of easily forming a visible image with favorable visibility on an optical disc in the blu-ray disc format.

### Means for Solving the Problems

Thus, the invention provides an optical disc, comprising a first substrate, an image-recording layer, a second substrate, an information-recording layer, and a cover layer disposed in this order, wherein: a thickness of the first substrate is 0.5 to 0.7 mm; a thickness of the second substrate is 0.4 to 0.7 mm; and grooves or pits are formed on the second substrate at a side at which the information-recording layer is formed.

The invention also provides an optical recording method of recording on an optical disc having at least an image-recording layer and an information-recording layer, the method comprising irradiating the optical disc with an information-recording laser beam from one side thereof to record information and irradiating the optical disc with an image-recording laser beam from another side thereof to record an image, wherein the wavelength of the information-recording laser beam is smaller than that of the image-recording laser beam. The wavelength of the information-recording laser beam is preferably 400 to 430 nm.

### Effects of the Invention

The invention provides an optical disc in the blu-ray disc format forming a visible image superior in visibility and an optical recording method of forming a visible image favorable in visibility easily on the optical disc in the blu-ray disc format.

### BRIEF DESCRIPTION OF THE DRAWINGS

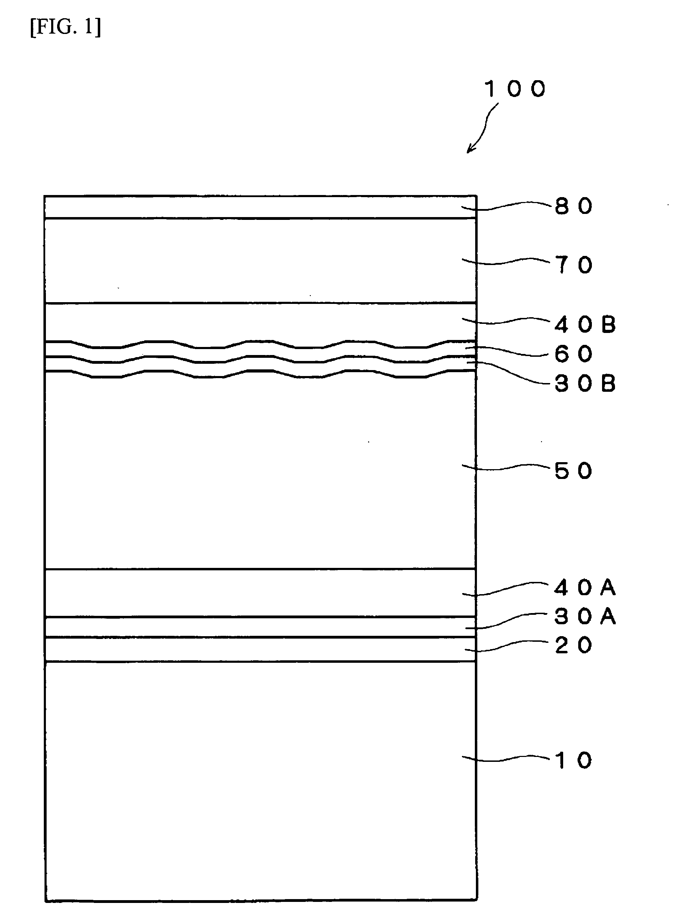

Fig. 1 is a schematic partial view showing an example of the configuration of an optical disc according to the invention.

### BEST MODE OF CARRYING OUT THE INVENTION

### (Optical disc)

Hereinafter, the optical disc according to the invention will be described. The optical disc according to the invention includes a first substrate, and an image-recording layer, a second substrate, an information-recording layer and a cover layer formed on the first substrate in this order. The thickness of the first substrate is 0.5 to 0.7 mm, and the thickness of the second substrate is 0.4 to 0.7 mm. Grooves or pits are formed on the second substrate at the side at which the information-recording layer is formed.

Because the optical disc according to the invention includes therein an image-recording layer disposed at the first substrate side, laser beam is irradiated from the first-substrate side when a visible image is recorded. As described above, the first substrate has a thickness of 0.5 to 0.7 mm and thus allows use of a pickup for DVD-R. As a result, it is possible to easily form a visible image without use of a special pickup. The thickness of the first substrate is preferably 0.55 to 0.65 mm, and more preferably 0.57 to 0.63 mm.

The second substrate is formed to make the optical disc rigid and to adjust the thickness thereof to a thickness suitable for the blu-ray disc format. In this regard, the thickness of the second substrate is 0.4 to 0.7 mm, preferably 0.45 to 0.6 mm, and more preferably 0.47 to 0.55 mm.

Grooves or pits are formed on the second substrate at the side at which an information-recording layer is formed. The grooves or pits are used as guide grooves for tracking and for expressing information such as rotation-synchronized signals, address signals, and data information. The grooves or pits may also be formed on the first substrate at the side at which an image-recording layer is formed.

The optical disc has a structure of the so-called blu-ray disc, and it is possible to record optical information by irradiation of laser beam in the direction from the cover layer side to the information-recording layer. It is possible to form (record) a visible image by irradiation of laser beam in the direction from the first substrate side to the image-recording layer. The optical disc according to the invention preferably includes additionally a reflective layer, a barrier layer, and a protective layer as needed.

The optical disc according to the invention may be a write-once or rewritable disc having an information-recording layer allowing recording and reproduction of information by laser beam, but is preferably a write-once disc. Examples of the information recording method include a phase transition type method and a dye type method. The information-recording method is not particularly limited, but preferably a dye type method.

The wavelength of the laser beam irradiated from the first substrate side is preferably 600 to 700 nm, more preferably 650 to 670 mm. The wavelength of the laser beam irradiated from the cover layer side is preferably 400 to 430 nm, more preferably 402 to 410 nm. The wavelength range of the laser beam irradiated from the first substrate side is the range of the laser beam used for DVD-R. For that reason, it is possible to form an image easily without need for a special device for forming an image.

Hereinafter, the configuration of the optical disc according to the invention will be described with reference to Fig. 1. Fig. 1 is a schematic view showing an example of the configuration of an optical disc according to the invention.

The first optical disc 100 according to the invention shown in Fig. 1 includes a first substrate 10 and an image-recording layer 20, a reflective layer 30A, and an adhesive layer 40A, a second substrate 50, and a reflective layer 30B, an information-recording layer 60, an adhesive layer 40B, a sheet 70 as a cover layer, and a hardcoat layer 80 formed thereon. The sheet 70 may be colored, as long as it has a high transmittance with respect to the laser beam. Such an optical disc is prepared, for example, as follows:

A first laminated body including a first substrate 10 and an information-recording layer 20 and a reflective layer 30A formed thereon and a second laminated body including a second substrate 50, a reflective layer 30B, and an information-recording layer 60 formed thereon are prepared first. The reflective layer 30A of the first laminated body and the second substrate 50 of the second laminated body are then bonded with an adhesive layer 40A by known means, and the information-recording layer 60 of the second laminated body and a (transparent) sheet 70 are bonded to each other with an adhesive layer 40B. The hardcoat layer 80 may be formed previously on the transparent sheet or may be formed after the bonding above. The layer structure above is only an example, and the invention is not restricted thereby. Various known layers (for example, a barrier layer formed between the information-recording layer and the adhesive layer) are favorably formed additionally as necessary. Alternatively, the hardcoat layer may be eliminated, depending on the configuration of the medium.

Specifically, each layer on the optical disc according to the invention may be formed by any known method. The order of forming the layers is also not particularly limited. Hereinafter, the components (substrate, layers, etc.) for the optical disc according to the invention will be described. Each layer on the optical disc according to the invention may be composed of a single layer or multiple layers.

### [Substrate]

The materials for the substrates (first and second substrates) may be selected from various materials used as the substrate for conventional optical discs. Examples of the substrate materials include glass, polycarbonates, acrylic resins such as polymethyl methacrylate, vinyl chloride resins such as polyvinyl chloride and polyvinyl chloride copolymers, epoxy resins, amorphous polyolefins, polyesters, and the like, and these materials may be used in combination as needed. Among the materials above, polycarbonates are favorable, from the viewpoints of moisture resistance, dimensional stability and price.

Guide grooves for tracking or irregularities (grooves or pits) for expressing information such as address signals are formed on at least one side of the second substrate (the side at which the information-recording layer is formed). It is preferable to use a substrate having grooves with a smaller track pitch than that of CD-R or DVD-R for obtaining a higher recording density. The track pitch of the grooves or pits is preferably in the range of 250 to 370 nm, more preferably in the range of 300 to 340 nm. The depth of groove (groove depth) is preferably in the range of 20 to 150 nm, more preferably in the range of 25 to 80 nm. The groove width is preferably in the range of 50 to 250 mm, more preferably in the range of 100 to 200 nm. Such grooves may be formed also on the first substrate on the side at which an image-recording layer is formed.

An undercoat layer may be formed on one side of the second substrate for improvement in planarity and adhesive strength and prevention of deterioration of the information-recording layer. Examples of the materials for the undercoat layer include polymer substances such as polymethyl methacrylate, acrylic acid-methacrylic acid copolymers, styrene-maleic anhydride copolymers, polyvinylalcohol, N-methylol acrylamide, styrene-vinyltoluene copolymers, chlorosulfonated polyethylene, nitrocellulose, polyvinyl chloride, chlorinated polyolefin, polyester, polyimide, vinyl acetate-vinyl chloride copolymers, ethylene-vinyl acetate copolymers, polyethylene, polypropylene, and polycarbonate; surface modifiers such as silane-coupling agents; and the like. The undercoat layer can be prepared, for example, by preparing a coating liquid by dissolving or dispersing the substance in a suitable solvent and applying the coating liquid on a substrate surface by coating, for example, by spin coating, dip coating, or extrusion coating. The thickness of the undercoat layer is generally in the range of 0.005 to 20 µm, preferably in the range of 0.01 to 10 µm.

### [Image-recording layer]

Visible images desirable for the user (visible information) such as character, figure, picture, are recorded by laser beam on the image-recording layer. Examples of the visible images include title of disc, content information, thumbnail of content, relevant picture, picture for design, copyright information, recording date, recording method, recording format, bar code and the like.

The visible image to be recorded in the image-recording layer means an image visually recognizable, and examples thereof include all visually recognizable information such as character (line), picture, and figure. Examples of the character information include designation information on authorized users, designation information on available periods, designation information on frequency of available times, rental information, resolution-specifying information, layer-specifying information, user-specifying information, copyright holder information, copyright number information, manufacturer information, production date information, sales date information, sales store information or information on sales persons, information on number of sets in use, area-specifying information, language-specifying information, application-specifying information, product user information, service number information, and the like.

The image-recording layer is not particularly limited, if it can record a visible image information such as character, figure, picture by irradiation of laser beam, and the recording materials (dye or phase-transition recording material) described above in the information-recording layer are favorably used as a constituent material for the layer, but the layer is preferably a layer containing a dye from the viewpoint of visibility.

In the optical disc according to the invention, the component for the information-recording layer described below (recording material: dye or phase-transition recording material) may be the same as or different from the component for the image-recording layer, but the components in the information-recording layer and the image-recording layer are preferably different from each other, because the required characteristics for the information-recording layer are different from those for the image-recording layer. Specifically, the component for the information-recording layer is preferably superior in recording and reproducing characteristics, while the component for the image-recording layer is preferably effective in improving the contrast of the recorded visible image.

In particular when a dye is used as a component for the image-recording layer, use of a cyanine dye, phthalocyanine dye, azo dye, azo metal complex, oxonol dye, or leuco dye, among the dyes described below, is preferable for improvement in the contrast of recorded image. Alternatively, one of the information-recording layer and the image-recording layer may be a phase-transition layer and the other a dye layer. In such a case, the information-recording layer is preferably a phase-transition layer, and the image-recording layer a dye layer.

The image-recording layer is formed by preparing a coating liquid by dissolving a dye described below in a solvent and applying the coating liquid. The solvent for use in preparation of the coating liquid for the information-recording layer described below may be used as the solvent. Other additives and the application method are also the same as those for the information-recording layer described below.

The thickness of the image-recording layer is preferably in the range of 0.01 to 50 µm, more preferably 0.05 to 5 µm, and still more preferably 0.07 to 0.5 µm.

### [Reflective layer]

The reflective layer is formed for improvement of reflectance in the information-recording layer during information reproduction and also for improvement in the visibility of visible image.

The material for the reflective layer, i.e., photoreflective substance, is preferably a material having a high reflectance to laser beam. Examples thereof include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi; stainless steel, and semiconductor materials. These substances may be used alone, in combination of two or more, or as an alloy. Favorable among them are Cr, Ni, Pt, Cu, Ag, Au, Al and stainless steel. The alloys thereof are also favorable. More preferable are Au, Ag, Al and the alloys thereof; still more preferable are Ag, Al and the alloys thereof; and most preferable are Ag alloys (Ag-Nd-Cu, Ag-Pd-Cu, Ag-In-Cu, and Ag-Bi-Nd).

The reflective layer can be prepared, for example, by depositing the photoreflective substance on the information- or image-recording layer by vapor deposition, sputtering or ion plating. The thickness of the reflective layer is generally in the range of 10 to 300 nm and preferably in the range of 50 to 150 nm.

### [Information-recording layer]

The information-recording layer, a layer wherein code information such as digital information (coded information) is recorded, is not particularly limited, and examples thereof include a dye-type (write-once) layer, a phase-transition layer, and the like, but the recording layer is preferably a dye-type layer.

Typical examples of the dyes contained in the dye-type recording layer include cyanine dyes, oxonol dyes, metal complex dyes, azo dyes, phthalocyanine dyes, and the like.

In addition, the dyes described in JP-ANos. 4-74690, 8-127174, 11-53758, 11-334204, 11-334205, 11-334206, 11-334207, 2000-43423, 2000-108513, and 2000-158818 and the like may be used favorably.

In addition, organic compounds such as triazole compounds, triazine compounds, cyanine compounds, merocyanine compounds, aminobutadiene compounds, phthalocyanine compounds, cinnamic acid compounds, viologen compounds, azo compounds, oxonol benzoxazole compounds, and benzotriazole compounds are also used favorably in the dye-type information-recording layer. Among these compounds, cyanine compounds, aminobutadiene compounds, benzotriazole compounds, phthalocyanine compounds, and oxonol compounds are particularly preferable.

The dye-type information-recording layer can be formed, for example, by vapor deposition, sputtering, CVD, or solvent coating, but solvent coating is preferable.

When solvent coating is used, the dye-type information-recording layer is formed by preparing a coating liquid by dissolving a recording material such as a dye, together with a quencher, a binder, and the like, in a solvent, applying the coating liquid on a substrate, and then drying the coated film. The concentration of the recording material (dye) in the coating liquid is generally in the range of 0.01 to 15 % by mass, preferably 0.1 to 10 % by mass, more preferably 0.5 to 5 % by mass, and most preferably 0.5 to 3 % by mass.

Examples of the solvents for the coating liquid include esters such as butyl acetate, ethyl lactate, and cellosolve acetate; ketones such as methylethylketone, cyclohexanone, and methylisobutylketone; chlorinated hydrocarbons such as dichloromethane, 1,2-dichloroethane, and chloroform; amides such as dimethylformamide; hydrocarbons such as methylcyclohexane; ethers such as dibutylether, diethylether, tetrahydrofuran, and dioxane; alcohols such as ethanol, n-propanol, isopropanol, n-butanol, and diacetone alcohol; fluorine-based solvents such as 2,2,3,3-tetrafluoropropanol; glycol ethers such as ethylene glycol monomethylether, ethylene glycol monoethylether, and propylene glycol monomethylether; and the like.

The solvents may be used alone or in combination of two or more, depending on the solubility of the dye used. The coating liquid may contain additionally various additives such as an antioxidant, a UV absorbent, a plasticizer, and a lubricant, according to applications.

Examples of the binders for use include natural organic polymer substances such as gelatin, cellulose derivatives, dextran, rosin, and rubber; and synthetic organic polymers including hydrocarbon resins such as polyethylene, polypropylene, polystyrene, and polyisobutylene, vinyl resins such as polyvinyl chloride, polyvinylidene chloride, and polyvinyl chloride-polyvinyl acetate copolymers, acrylic resins such as polymethyl acrylate and polymethyl methacrylate, early condensates of thermosetting resins such as polyvinyl alcohol, chlorinated polyethylene, epoxy resin, butyral resin, rubber derivative, and phenol-formaldehyde resin; and the like.

When a binder is used additionally as the material for the dye-type information-recording layer, the amount of the binder is generally is generally in the range of 0.01 to 50 times and preferably 0.1 to 5 times the mass of the dye.

Methods of the solvent application include spraying, spin coating, dipping, roll coating, blade coating, doctor roll coating, screen printing, and the like.

The thickness of the dye-type information-recording layer is generally in the range of 10 to 500 nm, preferably 15 to 300 nm, and more preferably 20 to 150 nm. The dye-type information-recording layer may be a single layer or a laminate of multiple layers.

The dye-type information-recording layer may contain a discoloration inhibitor additionally for improvement in its light stability. Commonly, a singlet oxygen quencher is used as the discoloration inhibitor. Any known singlet oxygen quencher described in publications including patent specifications may be used. Typical examples thereof include those described in JP-ANos. 58-175693, 59-31194, 60-18387, 60-19586, 60-19587, 60-35054, 60-36190, 60-36191, 60-44554, 60-44555, 60-44389, 60-44390, 60-54892, 60-47069, 68-209995, and 4-25492, JP-B Nos. 1-38680 and 6-26028, G.P. No. 350399, and Nippon Kagakukaishi JP, Oct. 1992, p.1141, and others.

The amount of the discoloration inhibitor such as the singlet oxygen quencher is usually in the range of 0.1 to 50 % by mass, preferably in the range of 0.5 to 45 % by mass, more preferably in the range of 3 to 40 % by mass, and particularly preferably in the range of 5 to 25 % by mass relative to the mass of the dye.

Typical examples of the materials for the phase-transition information-recording layer include Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te alloy, Ag-In-Sb-Te alloy, Ag-V-In-Sb-Te alloy, Ag-Ge-In-Sb-Te alloy, and the like. Among them, Ge-Sb-Te alloy and Ag-In-Sb-Te alloy are preferable, as the layers thereof are recordable for a great number of times.

The thickness of the phase-transition information-recording layer is preferably 10 to 50 nm and more preferably 15 to 30 nm. The phase-transition information-recording layer can be formed, for example, by a gas-phase thin film deposition method such as sputtering or vacuum deposition.

### [Barrier layer]

The barrier layer is preferably formed primarily for prevention of the deterioration of the dye in the information-recording layer and also for improvement in the storability of the image-recording layer.

The material for use as the barrier layer is not particularly limited, if it transmits the laser beam for recording an image on the image-recording layer, but preferably, for example, a dielectric material lower in permeability of gas and moisture. The barrier layer has a transmittance of 80% or more, more preferably 90% or more and still more preferably 95% or more, to the laser beam, for recording an image on the image-recording layer.

Typical examples of the materials for the barrier layer include materials containing the nitride, oxide, carbide, or sulfide of Zn, Si, Ti, Te, Sn, Mo, Ge, or the like; and preferable among the materials above are ZnS, MoO₂, GeO₂, TeO, SiO₂, TiO₂, ZuO, ZnS-SiO₂, SnO₂, and ZnO-Ga₂O₃; and more preferable are ZnS-SiO₂, SnO₂, and ZnO-Ga₂O₃.

The barrier layer can be formed on the recording layer by a vacuum film-forming method such as vacuum deposition, DC sputtering, RF sputtering, or ion plating. The film-forming condition in the vacuum film-forming method is adjusted properly according to the film material, desirable film thickness and film density, and others. The thickness of the barrier layer is preferably in the range of 1 to 200 nm, more preferably 2 to 100 mm, and still more preferably 3 to 70 nm.

### [Protective layer]

The protective layer is a layer optionally formed for physical and chemical protection of the information-recording layer and/or the image-recording layer.

Examples of the materials for the protective layer include inorganic materials such as ZnS, ZnS-SiO₂, SiO, SiO₂, MgF₂, SnO₂, and Si₃N₄; and organic materials such as thermoplastic resins, thermosetting resins, and UV-curing resins.

When the protective layer is formed with a thermoplastic or thermosetting resin, it may be formed by preparing a coating liquid by dissolving it in a suitable solvent, applying the coating liquid, and drying the coated film. When a UV-curing resin is used, it may also be formed by curing the coated film of the coating liquid by irradiation with UV light. The coating liquid may contain additionally other various additives such as an antistatic agent, an antioxidant, and a UV absorbent according to applications. The thickness of the protective layer is generally in the range of 0.1 to 20 µm.

### [Adhesive layer]

In the example of Fig. 1, the adhesive layer on the optical disc according to the invention is formed on the bonding surface when laminated bodies are bonded to each other or when a transparent sheet is bonded onto the information-recording layer transparent sheet.

When an adhesive is used for the adhesive layer, the adhesive is preferably, for example, a UV-curing resin, EB-curing resin, thermosetting resin, or the like, and use of a UV-curing resin is more preferable. In addition, the UV-curing resin for adhesive layer preferably has a smaller curing shrinkage, for prevention of warp of the optical disc. Examples of the UV-curing resins include "SD-640" manufactured by Dainippon Ink and Chemicals, Inc. and others.

The adhesive is applied on at least one bonding surface by a method of roll coating, spin coating, screen printing, or the like. Subsequent curing of the adhesive gives an adhesive layer. The thickness of the adhesive layer formed is preferably in the range of 10 to 100 µm, more preferably 20 to 60 µm, from the viewpoint of adhesive strength and leveling effect.

Instead of using an adhesive as described above, a transparent sheet previously having a pressure-sensitive adhesive applied as its adhesive layer may be used. The pressure-sensitive adhesive may be an acrylic, rubber-based, or silicon-based adhesive, but is preferably an acrylic pressure-sensitive adhesive from the viewpoint of transparency and durability.

As the acrylic adhesive, a copolymer of 2-ethylhexyl acrylate, n-butyl acrylate, or the like (main component) with a short-chain alkyl acrylate or methacrylate such as methyl acrylate, ethyl acrylate, or methyl methacrylate, which is added for improvement in aggregation force, and an acrylic acid, methacrylic acid, an acryl amide derivative, maleic acid, hydroxylethyl acrylate, or glycidyl acrylate, which may become the crosslinking point with a crosslinking agent, may be preferably used. By properly adjusting the blending ratio and the kind of the main component, the short-chain component, and the component for adding the crosslink-point, it becomes possible to alter the glass transition temperature (Tg) and the crosslinking density of the adhesive layer.

Examples of crosslinking agents used in combination with the adhesive include isocyanate-based crosslinking agents. Typical examples of the isocyanate-based crosslinking agents include isocyanates such as tolylene diisocyanate, 4,4'-diphenylmethane diisocyanate, hexamethylene diisocyanate, xylylene diisocyanate, naphthylene-1,5-diisocyanate, o-toluidine isocyanate, isophorone diisocyanate, and triphenylmethane triisocyanate; the products of such an isocyanates with a polyalcohol; and the polyisocyanates obtained by condensation of such an isocyanate. Examples of the commercially available products of these isocyanates include CORONATE L, CORONATE HL, CORONTE 2030, CORONTE 2031, MILLIONATE MR, and MILLIONATE HTL manufactured by Nippon Polyurethane Industry; TAKENATE D-102, TAKENATE D-110N, TAKENATE D-200, and TAKENATE D-202 manufactured by Takeda Chemicals; DESMODULE L, DESMODULE IL, DESMODULE N, and DESMODULE HL manufactured by Sumitomo Bayer; and the like.

### [Cover layer]

The cover layer is a layer aimed at protecting the inside of the optical disc physically and chemically. The cover layer is transparent in order to irradiate the information-recording layer and the image-recording layer with laser beam. More specifically, the cover layer preferably has a transmittance of 80% or more, more preferably 90% or more, and still more preferably 95% or more, both to the laser beam and a reflected beam.

Specifically, the transparent sheet (sheet) for use as cover layer is preferably made of an acrylic resin such as polycarbonate or polymethyl methacrylate; a vinyl chloride resin such as polyvinyl chloride or a vinyl chloride copolymer; an epoxy resin; an amorphous polyolefin; polyester; cellulose triacetate, or the like, more preferably among them, polycarbonate or cellulose triacetate. Use of cellulose triacetate (FUJITAC, manufactured by Fuji Photo Film Co., Ltd.) is still more preferable.

In the invention, the thickness of the transparent sheet is determined properly according to the laser beam for recording an image on the image-recording layer and also to the NA, but preferably in the range of 10 to 600 µm, more preferably 30 to 200 µm, and still more preferably 50 to 110 µm.

When an adhesive is used for the adhesive layer, a cover layer that is a transparent sheet is formed, for example, by "applying the adhesive on the bonding surface, for example of barrier layer, in a certain amount and placing a transparent sheet thereon" or "applying an adhesive on a transparent sheet in a certain amount and bonding the coated surface with a bonding surface such as of barrier layer", spreading the adhesive uniformly between the bonding surface and the transparent sheet by spin coating, and hardening the adhesive by a suitable hardening means (for example, ultraviolet irradiation). When the adhesive is an ultraviolet-curing resin, the adhesive may be hardened by ultraviolet irradiation for bonding.

The adhesive to be coated may be the curing resin described above as it is, or a coating liquid prepared by dissolving the curing resin described above in a suitable solvent such as methylethylketone or ethyl acetate.

When a pressure-sensitive adhesive is used as the adhesive layer, the cover layer is formed, for example, by applying the pressure-sensitive adhesive uniformly on the bonding surface of the barrier-layer in a certain amount, placing a transparent sheet thereon, and hardening the pressure-sensitive adhesive, or by forming a pressure-sensitive adhesive coated film by applying the pressure-sensitive adhesive on one side of the transparent sheet in a certain amount and bonding the coated film onto a surface to be bonded for example under vacuum or by rubber roller, and hardening the adhesive. Alternatively, an adherent transparent sheet having a pressure-sensitive adhesive previously provided may be used instead.

Another embodiment of the cover layer is a transparent curable resin layer. The materials for the transparent curable resin layer include the UV-curing resins, EB-curing resins, and thermosetting resins favorable for the adhesive above, and use of a UV-curing resin is particularly preferable. The UV-curing resin for the adhesive layer preferably has a smaller curing shrinkage, for more effective prevention of warp of the optical disc. Examples of such UV-curing resins include UV-curing resins such as "SD-640" manufactured by Dainippon Ink and Chemicals, Inc.

The thickness of the cover layer then may be decided according to the layer structure of the optical disc, but is preferably in the range of 10 to 600 µm, more preferably 30 to 200 µm, and still more preferably 50 to 110 µm, from the viewpoint of protecting property inside the optical disc and its transparency.

### [Hardcoat layer]

A hardcoat layer may be disposed on the light-incident side of the cover layer according to the invention for prevention of damage on the light-incident side during production of optical disc or during use. The material for the hardcoat layer is preferably a radiation-curing resin. Examples of the radiation-curing resins include acrylic esters, methacrylic esters, methacrylic amides, allyl compounds, vinyl ethers, vinyl esters, and the like. The thickness of the hardcoat layer is preferably 1 to 20 µm, more preferably 3 to 10 µm. The hardcoat layer can be formed by preparing a coating liquid containing a radiation-curing resin, applying the liquid on the cover layer, and hardening the resin by irradiation of a radiation ray (electron beam or ultraviolet ray).

### (Optical recording method)

The optical recording method according to the invention is a method at least of recording information by irradiating an optical disc having an image-recording layer and an information-recording layer with an information-recording laser beam from one side of the optical disc and recording an image (visible image) by irradiating the optical disc with an image-recording laser beam from the other side. The wavelength of information-recording laser beam is made smaller than that of the image-recording laser beam.

In the optical recording method according to the invention, the recording of the image in the image-recording layer and the recording of the optical information in the information-recording layer may be conducted in a single optical disc drive (recording device) having functions to record such information on both layers. When such a single optical disc drive is used, recording on one of the image-recording layer and the information-recording layer is first performed, and then, the disc is turned over, so that the recording on the other layer can be conducted. In an optical disc drive having a pickup for the image-recording layer and a pickup for the information-recording layer over both sides of the disc, it is possible to record the image and information simultaneously or stepwise without turning over of the disc. Optical disc drives having functions of recording of visible images on the image-recording layer are described, for example, in JP-A Nos. 2003-203348 and 2003-242750, and others.

The recording device of recording optical information on the information-recording layer and a visible image on the image-recording layer has at least a laser pickup for emitting laser beam and a rotating mechanism for rotating the optical disc. Any known object lens and laser may be used as the object lens and the laser used for the pickup, as it is selected properly according to the optical disc to be recorded.

The optical disc used in the optical recording method according to the invention is not limited to the optical disc according to the invention described above, as long as, as described above, the optical disc has an image-recording layer and an information-recording layer and has a structure in which information may be recorded by irradiation of an information-recording laser beam from one side of the optical disc and an image may be recorded by irradiation of an image-recording laser beam from the other side.

Specifically, in addition to the optical disc according to the invention, the method is applicable to the optical discs in the following configurations (I) to (III).

(I) Configuration having a reflective layer, an information-recording layer, a barrier layer, an adhesive layer, and a transparent sheet (as first cover layer) formed on one side of a substrate and a reflective layer, an image-recording layer, a barrier layer, an adhesive layer, and a transparent sheet (as second cover layer) formed on the other side of the substrate.

(II) Configuration having an image-recording layer, a reflective layer, an information-recording layer, a barrier layer, an adhesive layer, and a transparent sheet (as cover layer) formed on a substrate.

(III) Configuration having an image-recording layer, a reflective layer, an adhesive layer, a reflective layer, an information-recording layer, and a transparent sheet (as cover layer) formed on a substrate 10.

### (1) Method of recording a visible image

The method of recording a visible image on the image-recording layer by using the recording device will be described. The laser pickup is focused on the image-recording layer of an optical disc rotated by a rotating mechanism and driven along the face of the optical disc as guided by the tracking groove formed thereon; and the laser beam (for example, at 660 nm) is modulated according to the image data to be formed such as character or figure, irradiated from the second cover layer side onto the image-recording layer synchronously with the relative movement, forming a visible image. Such configurations are described, for example, in JP-A No. 2002-203321.

The wavelength of the laser beam irradiated from the cover layer side (information-recording laser beam) is smaller than that of the laser beam irradiated from the first substrate side (image-recording laser beam). In addition, the wavelength of the image-recording laser beam is preferably 600 to 700 nm, more preferably 650 to 670 mm. The numerical aperture (NA) of the object lens used for the laser pickup is preferably 0.60 to 0.68, more preferably 0.62 to 0.67.

Recording of a visible image on the image-recording layer does not always demand tracking, and in such a case, the visible image may be recorded, for example, by laser irradiation according to the desired image data by controlling a stepping motor or the like.

### (2) Information recording method

Hereinafter, recording of information (digital information) on the information-recording layer by using a recording device will be described next. When the information-recording layer is a dye-type layer, a laser beam is first irradiated from the first cover layer side from a laser pickup onto an unrecorded optical recording medium which is rotating at a certain recording linear velocity. The wavelength of the laser beam is preferably 400 to 430 nm, more preferably 402 to 430 nm. By irradiation, the dye in the information-recording layer, absorbing the ray, is heated, forming a desirable pit and changing the optical properties of the region, and consequently recording the information. The information recorded in the information-recording layer is reproduced by irradiation of laser beam from the laser pickup onto the information-recording layer of the rotating optical disc.

Examples of the laser beam sources having a emission wavelength of 400 to 430 nm include blue purple semiconductor lasers having an emission wavelength in the range of 400 to 415 nm; blue purple SHG lasers having a central emission wavelength of approximately 430 nm; and the like. The numerical aperture (NA) of the object lens for the pickup is preferably 0.7 to 0.9, more preferably 0.82 to 0.88, for raising the recording density.

Hereinafter, the case when the information-recording layer is a phase-transition layer will be described. When the information-recording layer is a phase-transition layer, the information-recording layer is made of the material described above, and the layer repeats phase-transition between crystalline and amorphous phases by laser irradiation. During information recording, a focused laser beam pulse is irradiated for a short term, partially melting the phase-transition information-recording layer. The melted region is cooled rapidly by thermal diffusion and solidifies, giving a recorded mark in the amorphous state. Alternatively during erasion, the recorded mark region is heated to a temperature not lower than the crystallization temperature and not higher than the melting point of the information-recording layer by irradiation of laser beam, and then cooled gradually, crystallizing the recorded mark in the amorphous state back into the unrecorded state.
The description in Japanese Patent Application No. 2005-80353 is herein incorporated by reference in the present description.

The invention will be described more specifically with reference to Examples shown below, but it should be understood that the invention is not limited thereto.

### Example 1

### (Preparation of optical disc)

An injection-molded substrate (first substrate) of a polycarbonate resin (polycarbonate, trade name: PANLITE AD5503, manufactured by Teijin Chemicals Ltd.) having a thickness of 0.6 mm and a diameter of 120 mm was prepared.

Oxonol dyes UXD2 and TXD1 (both manufactured by Fuji Photo Film Co., Ltd.) were mixed at a mass ratio (UXD2:TXD1) of 1:2, and dissolved in 2,2,3,3-tetrafluoropropanol at a concentration of 15 g/L, to give a coating liquid. The coating liquid was applied on the first substrate by spin coating, dried under heat in a clean oven at 80°C for 30 minutes, forming an image-recording layer (thickness: 100 nm) on the groove-formed face of the substrate.

A reflective layer having a thickness of 100 nm was formed by sputtering of Ag on the obtained image-recording layer, to give a first laminated body.

An injection-molded substrate (second substrate) of a polycarbonate resin (polycarbonate, trade name: PANLITE AD5503, manufactured by Teijin Chemicals Ltd.) having a spiral groove (width: 120 nm and track pitch: 320 nm), a thickness of 0.5 mm and a diameter of 120 mm was prepared.

A reflective layer having a thickness of 100 nm was formed by sputtering Ag on the groove-formed face of the second substrate.

12 g of an organic phthalocyanine compound, dye A (ORASOL BLUE GN, manufactured by Ciba Specialty Chemicals, absorption maximum: 340 nm and 640 nm) was added to 1 liter of 2,2,3,3-tetrafluoropropanol and dissolved therein by ultrasonication for 2 hours, to give a coating liquid for forming recording layer. An information-recording layer having a thickness of 50 nm was formed on the reflective layer by spin coating with the coating liquid.

The information-recording layer formed was heat-treated in a clean oven at 80°C for 1 hour. After heat treatment, a barrier layer having a thickness of 5 nm was formed on the information-recording layer by a vacuum film-forming method by using a target of ZnO: 7 parts by mass and Ga₂O₃: 3 parts by mass, to give a second laminated body.

A cellulose triacetate film (FUJITAC manufactured by Fuji Photo Film Co., Ltd., thickness: 80 µm) with a coated adhesive having a thickness 80 µm was bonded onto the barrier layer, forming a cover layer. The thickness of the adhesive layer of the pressure-sensitive adhesive after bonding was 20 µm.

An adhesive SD6830 (manufactured by Dainippon Ink and Chemicals) was applied on the reflective layer of the first laminated body; the second substrate of the second laminated body was placed on the coated surface; and the composite was irradiated with ultraviolet ray, to give an optical disc. The thickness of the adhesive layer of adhesive between the first body and the second laminated body was 35 µm.

### (Formation of visible image)

The optical disc thus prepared was irradiated with a laser beam at a wavelength of 405 nm from the cover layer side of the optical disc at an NA of 0.85, to record information. The disc was then turned over and irradiated with a laser beam at a wavelength of 660 nm from the first substrate side at an NA of 0.65, to record a visible image. DDU 1000 manufactured by Pulstec Industrial Co., Ltd. was used for information recording and visible image formation. The visibility of the formed visible image was very favorable and the recorded information was reproduced without problem.

### EXPLANATION OF REFERENCE NUMERALS

- 10: First substrate
- 20: Image-recording layer
- 30A: Reflective layer
- 30B: Reflective layer
- 40A: Adhesive layer
- 40B: Adhesive layer
- 50: Second substrate
- 60: Information-recording layer
- 70: (Transparent) sheet (cover layer)
- 80: Hardcoat layer
- 100: Optical disc

## Claims

1. An optical disc, comprising
a first substrate, an image-recording layer, a second substrate, an information-recording layer, and a cover layer disposed in this order, wherein:
a thickness of the first substrate is 0.5 to 0.7 mm; a thickness of the second substrate is 0.4 to 0.7 mm; and grooves or pits are formed on the second substrate at a side at which the information-recording layer is formed.

2. The optical disc of Claim 1, further comprising a barrier layer between the information-recording layer and the cover layer.

3. The optical disc of Claim 1, wherein the thickness of the second substrate is 0.45 to 0.6 mm.

4. The optical disc of Claim 1, wherein grooves or pits are formed on the first substrate at a side at which the image-recording layer is formed.

5. An optical recording method of recording on an optical disc having at least an image-recording layer and an information-recording layer, the method comprising
irradiating the optical disc with an information-recording laser beam from one side thereof to record information and
irradiating the optical disc with an image-recording laser beam from another side thereof to record an image, wherein
the wavelength of the information-recording laser beam is smaller than that of the image-recording laser beam.

6. The optical recording method of Claim 6, wherein the wavelength of the information-recording laser beam is 400 to 430 nm.

7. The optical recording method of Claim 6, wherein the wavelength of the information-recording laser beam is 402 to 430 nm.

8. The optical recording method of Claim 6, wherein the wavelength of the image-recording laser beam is 600 to 700 nm.

9. The optical recording method of Claim 6, wherein the information-recording laser beam is irradiated from a laser pickup having an object lens having a numerical aperture of 0.7 to 0.9.

10. The optical recording method of Claim 6, wherein the image-recording laser beam is irradiated from a laser pickup having an object lens having a numerical aperture of 0.60 to 0.68.
